# EUROPEAN PATENT SPECIFICATION

(11) **EP 3 056 711 B1**
(45) Date of publication and mention of the grant of the patent: **05.12.2018**
(21) Application number: 15155075.3
(22) Date of filing: 13.02.2015
(51) Int. Cl.: F02B 29/04

(54) **Cooling system for an internal combustion engine**
Kühlsystem für einen Verbrennungsmotor
Système de refroidissement pour moteur à combustion interne

(43) Date of publication of application: 17.08.2016
(73) Proprietor: Caterpillar Motoren GmbH & Co. KG, 24159 Kiel (DE)
(72) Inventor: STURM, Michael, 24214 Gettorf (DE); WAGENER, Benjamin, 23795 Schackendorf (DE)
(74) Representative: BRP Renaud & Partner mbB Rechtsanwälte Patentanwälte Steuerberater

(56) References cited:
- EP-A1- 1 985 953
- EP-A1- 2 161 428
- EP-A1- 2 412 950
- DE-A1-102013 203 099
- US-A- 4 620 509

## Description

### Technical Field

The present disclosure relates to a cooling system for an internal combustion engine, and more particularly to a cooling system for a turbocharged internal combustion engine.

### Background

In some cases components of internal combustion engines have to cope with conflicting energy demands at engine operation. For example, charge air coolers of a turbocharged internal combustion engine are designed to either remove a maximized amount of heat from the charge air at high temperature levels to recover heat, such as for heating applications. Or charge air coolers are designed to provide a high engine efficiency at high ambient air temperatures to safe fuel and/or limit emissions during operation of the internal combustion engine subject to high ambient air temperatures. Currently, different charge air cooler designs in different engine coolings systems are used to meet those demands. EP2412950, EP2161428 or DE102013203099 disclose such charge air cooler designs.

The present disclosure is directed, at least in part, to improving or overcoming one or more aspects of prior systems.

### Summary of the Disclosure

According to an aspect of the present disclosure, a cooling system for an internal combustion engine is disclosed. The cooling system comprises a high-temperature cooling circuit piping including high-temperature cooling circuit connection ports, a low-temperature cooling circuit piping including low-temperature cooling circuit connection ports, and a two-stage charge air cooler unit. The two-stage charge air cooler unit further includes a first cooling stage with first cooling stage connection ports, and a second cooling stage with second cooling stage connection ports. The first cooling stage provides a first heat transfer performance and the second cooling stage provides a second heat transfer performance different from the first heat transfer performance. The two-stage charge air cooler unit includes a first mounting position and a second mounting position in the cooling system. In the first mounting position, the first cooling stage is connected to the high-temperature cooling circuit connection ports via the first cooling stage connection ports, and the second cooling stage is connected to the low-temperature cooling circuit connection ports via the second cooling stage connection ports. In the second mounting position, the first cooling stage is connected to the low-temperature cooling circuit connection ports via the first cooling stage connection ports, and the second cooling stage is connected to the high-temperature cooling circuit connection ports via the second cooling stage connection ports.

According to another aspect of the present disclosure, an internal combustion engine is disclosed. The internal combustion engine comprises a cylinder unit, a turbocharger configured to provide charge air to the cylinder unit, and a cooling system as exemplary disclosed herein.

According to another aspect of the present disclosure, a method for connecting a two-stage charge air cooler unit in a cooling system for an internal combustion engine is disclosed. The cooling system includes a high-temperature cooling circuit and a low-temperature cooling circuit. The two-stage charge air cooler unit includes a first cooling stage with a high heat transfer performance and a second cooling stage with a low heat transfer performance. The two-stage charge air cooler unit further includes a first mounting position and a second mounting position in the cooling system. In the first mounting position, the first cooling stage is connected to the high-temperature cooling circuit, and the second cooling stage is connected to the low-temperature cooling circuit. In the second mounting position, the first cooling stage is connected to the low-temperature cooling circuit, and the second cooling stage is connected to the high-temperature cooling circuit. The method comprises determining whether a high heat transfer performance in the high-temperature cooling circuit or in the low-temperature cooling circuit is required. The method further comprises connecting the two-stage charge air cooler unit in the first mounting position if a high heat transfer performance in the high-temperature cooling circuit is required. The method further comprises connecting the two-stage charge air cooler unit in the second mounting position if a high heat transfer performance in the low-temperature cooling circuit is required.

Other features and aspects of this disclosure will be apparent from the following description and the accompanying drawings.

### Brief Description of the Drawings

The accompanying drawings, which are incorporated herein and constitute a part of the specification, illustrate exemplary embodiments of the disclosure and, together with the description, serve to explain the principles of the disclosure. In the drawings:
Fig. 1 shows a schematic drawing of an exemplary cooling system including a two-stage charge air cooler unit for an internal combustion engine;
Fig. 2 shows a schematic drawing of an exemplary two-stage charge air cooler unit in a first mounting position in the exemplary cooling system of Fig. 1;
Fig. 3 shows a schematic drawing of the same exemplary two-stage charge air cooler unit of Fig. 2 in a second mounting position;
Fig. 4 shows a schematic cross-sectional cut through an exemplary two-stage charge air cooler unit; and
Fig. 5 shows a schematic drawing of a V-shaped internal combustion engine including two exemplary two-stage charge air cooler units.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure is based in part on the realization that a single two-stage charge air cooler unit may be able to provide both a high amount of heat at high charge air temperature levels and a high resistance of the internal combustion engine to high ambient air temperatures. Thus, a single two-stage charge air cooler unit may be able to recover a maximized amount of heat from charge air for use in heating applications, and achieve high engine efficiencies at high ambient air temperatures.

The present disclosure is further at least partly based on the realization that the two conflicting energy demands may be satisfied by using a single two-stage charge air cooler unit including a high heat performance cooling stage and a low heat performance cooling stage.

The present disclosure is further at least partly based on the realization that the single two-stage charge air cooler unit may be mounted in two mounting positions within the cooling system for satisfying the respective energy demand, wherein, in a first mounting position, the high heat performance cooling stage is connected to a high-temperature cooling circuit, and, in a second mounting position, the high heat performance cooling stage is connected to a low-temperature cooling circuit.

The present disclosure is further at least partly based on the realization that those two mounting positions within the cooling system may be achieved by a single two-stage charge air cooler unit including connecting ports for a high-and low-temperature cooling circuits that have identical geometry and are symmetric with respect to a plane perpendicular to a flow direction of charge air. Thus, both mounting positions can be realized by rotation the two-stage charge air cooler unit by 180° in clockwise or counter-clockwise direction with respect to the flow direction of charge air.

The present disclosure is further at least partly based on the realization that, when the connecting ports for a high-and low-temperature cooling circuits have identical geometry and are symmetric with respect to a plane perpendicular to a flow direction of charge air, both energy demands can be satisfied by using a single two-stage charge air cooler unit with a high heat performance cooling stage and a low heat performance cooling stage connected to the cooling system in the respective mounting position without the need to change any of the pipework or connection ports of the remaining cooling system.

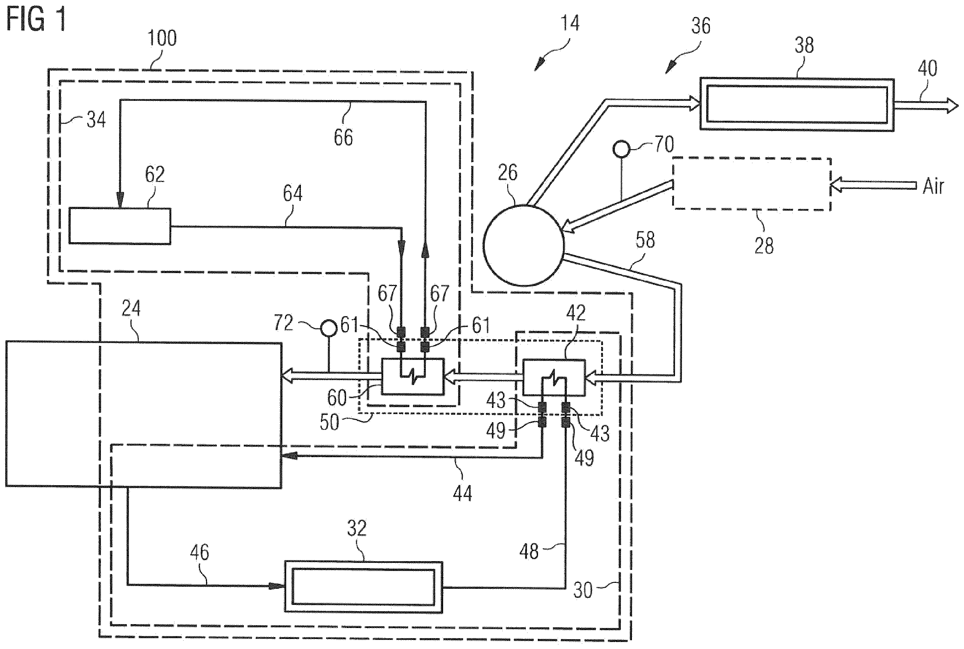

Referring now to the drawings, Fig. 1 shows a schematic drawing of an exemplary cooling system 100 of an internal combustion engine 14.

Internal combustion engine 14 includes a cylinder unit 24 such as, for example, a diesel, heavy fuel, or gas powered cylinder unit 24. Cylinder unit 24 may include a plurality of cylinders and a plurality of piston assemblies disposed within the cylinders (not shown). Cylinder unit 24 may include any number of cylinders, and the cylinders may be disposed in an "in-line" configuration, a "V" configuration, or in any other conventional configuration.

Multiple sub-systems may be included in internal combustion engine 14 to support combustion processes in cylinder unit 24. Among others, internal combustion engine 14 includes a turbocharger 26, a cooling system 100 and an exhaust system 36. Cooling system 100 includes a high-temperature cooling circuit 30, a low-temperature cooling circuit 34, and a two-stage charge air cooler unit 50. Two-stage charge air cooler unit 50, turbocharger 26, high-temperature cooling circuit 30, low-temperature cooling circuit 34, and cylinder unit 24 are connected via a charge air passage 58.

Turbocharger 26 is configured to receive ambient air and compress the ambient air to arrive at charge air, thereby increasing a temperature of the ambient air from, for example, about 25°C to about 260°C. Turbocharger 26 includes a compressor (not shown) for compressing the ambient air entering the turbocharger 26 and a turbine (not shown) driven by the exhaust gas in exhaust system 36. For example, there may be an exhaust gas connection from cylinder unit 24 to turbocharger 26 (not shown).

High-temperature cooling circuit 30 is configured to cool a flow of charge air exiting turbocharger 26. Cooling is performed by circulating a coolant medium, such as water, within high-temperature cooling circuit 30. Low-temperature cooling circuit 34 is configured to further cool the flow of charge air downstream of high-temperature cooling circuit 30 and is configured to provide the cooled charge air to cylinder unit 24. Again, the flow of charge air is cooled by circulating a coolant medium, such as water, in the low-temperature cooling circuit 34. Exhaust system 36 is configured to exhaust byproducts of the combustion process in cylinder unit 24 to the atmosphere.

In some embodiments, temperature sensors 70, 72 may be arranged in the flow path of the charge air to the cylinder unit 24 to detect the temperature of the charge air. For example, temperature sensor 70 may be arranged upstream of turbocharger 26, and temperature sensor 72 may be arranged downstream of low-temperature cooling circuit 34. Temperature sensors 70, 72 may communicate, for example, with a controller (not shown) of internal combustion engine 14.

Cooling system 100 further includes includes high-temperature cooling circuit pipings 44, 46, 48, high-temperature cooling circuit connection ports 49, low-temperature cooling circuit pipings 64, 66, and low-temperature cooling circuit connection ports 67. Two-stage charge air cooler unit 50 includes a first cooling stage 42 and a second cooling stage 60. First and second cooling stages 42, 60 are connected one to another via charge air passage 58 and together form a compact unit, as indicated by the dashed rectangle. First cooling stage 42 includes first cooling stage connections ports 43, and second cooling stage 60 includes second cooling stage connection ports 61. In a first mounting position, first cooling stage 42 is connected to high-temperature cooling circuit connection ports 49 via first cooling stage connection ports 43, thereby forming high-temperature cooling circuit 30, and second cooling stage 60 is connected to low-temperature cooling circuit connection ports 67 via second cooling stage connection ports 61, thereby forming low-temperature cooling circuit 34. Thus, in the first mounting position charge air first passes first cooling stage 42 and then second cooling stage 60. Or in other words, for a given flow direction of charge air, first cooling stage 42 is arranged upstream of second cooling stage 60.

As will be explained later, in a second mounting position (not shown in Fig. 1), first cooling stage 42 is connected to low-temperature cooling circuit connection ports 67 via first cooling stage connection ports 43, thereby forming low-temperature cooling circuit 34, and second cooling stage 60 is connected to high-temperature cooling circuit connection ports 49 via second cooling stage connection ports 61, thereby forming high-temperature cooling circuit 30. Thus, in the second mounting position, charge air first passes second cooling stage 60 and then first cooling stage 42. Or in other words, for the given flow direction of charge air, first cooling stage 42 is arranged downstream of second cooling stage 60.

First cooling stage connection ports 43 and second cooling stage connection ports 61 are directly connected to high-temperature cooling circuit connection ports 49 and low-temperature cooling circuit connection ports 67. Thus, no further piping or other connecting adapters may be used to connect first and second cooling stages 42, 60 to high-temperature cooling circuit piping 44, 46, 48 and low-temperature cooling circuit piping 64, 66.

In some embodiments, high-temperature cooling circuit piping 44, 46, 48, high-temperature cooling circuit connection ports 49, low-temperature cooling circuit piping 64, 66, and low-temperature cooling circuit connection ports 67 may be fixed within cooling system 100. Thus, piping 44, 46, 48, 64, 66 and connection ports 49, 67 may have a fixed geometry and a fixed position within cooling system 100 independent of the mounting position of two-stage charge air cooler unit 50.

Two-stage charge air cooler unit 50 is connected to turbocharger 26 via charge air passage 58 and is configured to receive charge air exiting turbocharger 26. For example, the charge air may have a temperature of 260°C.

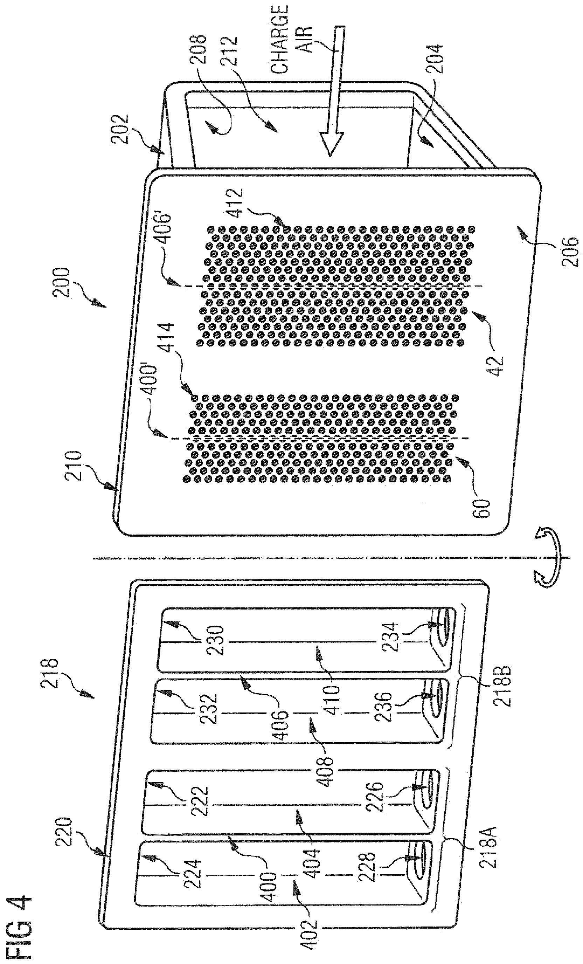

First cooling stage 42 is configured to cool the charge air using a coolant medium circulating in high-temperature cooling circuit 30. First cooling stage 42 may be configured to cool the charge air to a temperature of, for example, about 90°C, thereby increasing the coolant temperature from, for example, about 60°C to about 80°C. Depending on the heat transfer performance of first cooling stage 42 the charge air may be cooled to a temperature larger or smaller than 90°C. The heat transfer performance may be determined, for example, by the flow rate of coolant medium or the design of first cooling stage 42. Examples of parameters determining the heat transfer performance of first cooling stage 42 are given when referring to Fig. 4.

The heated coolant medium is further directed to cylinder unit 24 via high-temperature cooling circuit piping 44 to cool cylinder unit 24, thereby further increasing the temperature of the coolant medium, for example, from 80°C to 90°C. After cooling cylinder unit 24, the coolant medium is directed to a high-temperature heat recovery system 32 via high-temperature cooling circuit piping 46.

In high-temperature heat recovery system 32, heat is extracted from the coolant medium of the high-temperature cooling circuit 30 to be utilized, for example, for heating applications. In the process of heat extraction, the temperature of the coolant medium is reduced to, for example, 60°C. Thus, by changing a heat transfer performance of first cooling stage 42, the amount of heat transferred from the charge air to the coolant medium can be adjusted, and, thereby, also the amount of heat recovered by high-temperature heat recovery system 32 can be adjusted. When, for example, the heat transfer performance of first cooling stage 42 is high, then an amount of heat recoverable by high-temperature heat recovery system 32 is large. Likewise, when the heat transfer performance of first cooling stage 42 is low, then also the amount of heat recoverable by high-temperature heat recovery system 32 is small. As a consequence, if, for example, a large amount of heat needs to be recovered, first cooling stage 42 is designed with a large heat transfer performance, because then the coolant medium is able to recover a large amount of heat from the hot charge air.

Once the coolant medium has exited high-temperature heat recovery system 32, the coolant medium is then directed to first cooling stage 42 via high-temperature cooling circuit piping 48, thereby closing high-temperature cooling circuit 30.

Second cooling stage 60 is configured to further cool the charge air downstream of first cooling stage 42 using a coolant medium circulating in low-temperature cooling circuit 34. Second cooling stage 60 may be configured to cool the charge air from, for example, 90°C down to about 45°C, thereby increasing the coolant temperature from, for example, about 35°C to about 45°C. The charge air is then directed to cylinder unit 24 via charge air passage 58. Again, depending on the heat transfer performance of second cooling stage 60 charge air may be cooled to a temperature higher or lower than 45°C. Thus, coolant temperature may be lower or higher than 45°C.

However, in medium-speed running engines, such as internal combustion engine 14, a charge air temperature entering cylinder unit 24 is usually controlled to be close to 45°C. The reason for this is, state-of-the-art engines are usually tuned to produce the highest engine efficiency and the least exhaust emissions, when running on charge air with a temperature of 45°C. Higher temperatures than 45°C, may, therefore, produce larger amounts of exhaust emissions or may require larger amounts of fuel to achieve the required power output. Thus, strictly speaking, by changing the heat performance of second cooling stage 60, not the charge air temperature entering cylinder unit 24 is changed, but a resistance of internal combustion engine 14 to high ambient air temperatures is changed. This is because, if the ambient air temperature increases, then internal combustion engine 14 may sooner produce large amounts of exhaust emissions or may sooner require more fuel, compared to lower ambient air temperatures. When second cooling stage 60, however, has a high heat transfer performance, the amount of heat extracted from the charge air downstream of first cooling stage 42 may be increased, and, therewith, also a critical temperature of ambient air at which internal combustion engine 14 achieves its required power output of, for example, 100 %, may be increased. Internal combustion engine 14 may, therefore, produce less exhaust emissions or may require less fuel at high ambient air temperatures compared to using a low heat transfer performance cooling stage. For example, by increasing a charge air cooler efficiency of second cooling stage 60 by 5 % points, a critical ambient air temperature may be increased by 3 K. Again, example parameters for determining the heat transfer performance of second cooling stage 60 are given when referring to Fig. 4.

Once the coolant medium exits second cooling stage 60, the coolant medium is further directed to a cooler 62 via low-temperature cooling circuit piping 66, where the heat extracted from charge air using the coolant medium is discharged into the environment. Cooler 62 may be, for example, a convection cooler, such as a table cooler. In the process of cooling, the temperature of the coolant medium is reduced from, for example, about 45°C to about 35°C. The coolant medium is then further directed to second cooling stage 60 via low-temperature cooling circuit piping 64, thereby closing low-temperature cooling circuit 34.

It should be appreciated that high-temperature cooling circuit 30 and low-temperature cooling circuit 34 may include additional valves, coolant lines, sensors, etc., that are not shown in Fig. 1, which may be used to control operation of the respective cooling circuits. The operation of the cooling circuits and their various components may, for example, be controlled by an engine controller.

Exhaust system 36 includes components configured to direct exhaust gas from cylinder unit 24 to the atmosphere. For the sake of simplicity, the section of exhaust system 36 connecting cylinder unit 24 to turbocharger 26 is not shown. As can be seen in Fig. 1, exhaust system 36 includes an exhaust gas passage 40 and an exhaust gas heat recovery system 38 for utilizing heat of the exhaust gas flowing through exhaust gas passage 40, for example, to generate steam. Exhaust system 36 may further include additional components, for example, one or more exhaust components fluidly disposed within exhaust gas passage 40 to treat and/or condition exhaust gas before discharge to the atmosphere.

During operation of internal combustion engine 14, hot exhaust gas is generated in cylinder unit 24. The hot exhaust gas is directed to turbocharger 26 to drive the turbine of turbocharger 26, and is further directed from turbocharger 26 to exhaust gas heat recovery system 38 via exhaust gas passage 40. For example, the exhaust gas exiting turbocharger 26 may have an exhaust gas temperature of 350°C.

In exhaust gas heat recovery system 38, the hot exhaust gas may be uitlized to generate steam or may be utilized in any other known manner. During this process, the temperature of the exhaust gas may be reduced, for example, to a range between about 220°C and 100°C depending on the type of fuel used in cylinder unit 24. The reduced temperature exhaust gas is then released to the atmosphere via exhaust gas passage 40.

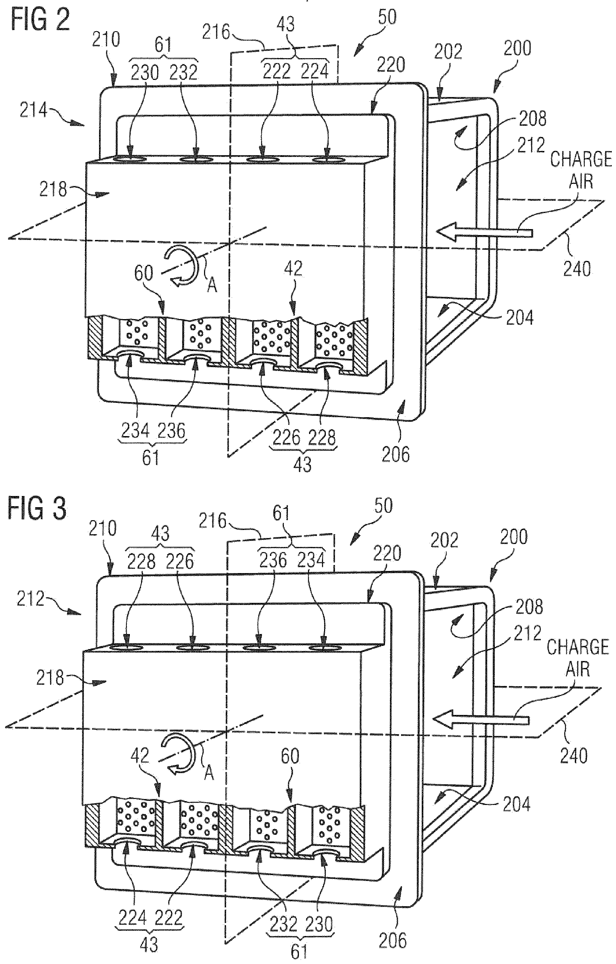

Referring now to Fig. 2, an exemplary two-stage charge air cooler unit 50 as used in exemplary cooling system 100 of Fig. 1 is schematically shown. Two-stage charge air cooler unit 50 is a compact unit including a main body 200 with a top side 202 and a bottom side 204 opposite top side 202. Main body 200 further includes a front side 206 and a back side 208 opposite front side 206. Front side 206 further includes a flange 210 for connecting two-stage charge air cooler unit 50 to internal combustion engine 14. Connection between flange 210 and internal combustion engine 14 may be any type of removable connection using any kind of removable connection means, such as bolts, screws, clamps or the like. Flange 210 may further include bores, recesses (not shown) or the like for connecting the removable connection means to flange 210.

Two-stage charge air cooler unit 50 further includes a first charge air opening 212 and a second charge air opening 214 opposite first charge air opening 212. First and second charge air opening 212, 214 define a charge air passageway between them for guiding charge air from first to second charge air opening 212, 214 or from second to first charge air openings 214, 212. Exemplarily, in Fig. 2 a flow of charge air is shown to have a direction from the right-hand side to the left-hand side, e.g. from charge air opening 212 to charge air opening 214, indicated by the arrow.

First and second charge air openings 212, 214 have the same geometry, e.g. same dimensions, same sizes, same shape, etc. Thus, first and second charge air openings 212, 214 are equally sized and configured to admit charge air to two-stage charge air cooler unit 50 from either first charge air opening 212 or second charge air opening 214. First and second charge air openings 212, 214 are further symmetric to a plane 216 extending midway between first and second charge air openings 212, 214 perpendicular to the flow direction of charge air. First and second charge air opening 212, 214, therefore not only have the same geometry, but also have the same distance from plane 216.

Two-stage charge air cooler unit 50 further includes a coolant medium box 218 mounted to front side 206 of two-stage charge air cooler unit 50 via a flange 220. Again, connection between front side 206 and coolant medium box 218 may be a removable connection using any kind of removable connection means, such as bolts, screws or the like. In some embodiments, coolant medium box 218 may also be non-removably connected to front side 206, such as by welding, soldering or the like. Coolant medium box 218 is configured to admit coolant medium to first and second cooling stages 42, 60 and discharge coolant medium after circulation through first and second cooling stages 42, 60, as will be seen when referring to Fig. 4.

As mentioned, first cooling stage 42 includes first cooling stage connection ports 43, and second cooling stage 60 includes second cooling stage connection ports 61. As can be seen in Fig. 2, those connection ports are disposed on coolant medium box 218. As such, coolant medium box 218 includes four connection ports 222, 224, 226, 228 which together form first cooling stage connection ports 43, and four connection ports 230, 232, 234, 236 which together form second cooling stage connection ports 61. First cooling stage connection ports 222, 224, 226, 228 and second cooling stage connection ports 230, 232, 243, 236 each have identical geometry, e.g. the same size, same cross-section, etc. First cooling stage connection ports 222, 224, 226, 228 are further symmetric to second cooling stage connection ports 230, 232, 234, 236 with respect to plane 216. Thus, first cooling stage connection ports 222, 224, 226, 228 and second cooling stage connection ports 230, 232, 234 have the same distance from plane 216, when viewed in the direction of charge air flow.

Moreover, first cooling stage connection ports 222, 224, 226, 228 include a first set of first mounting position connection ports 222, 224 and a first set of second mounting position connection ports 226, 228. The first set of first mounting position connection ports 222, 224 is disposed more proximal to top side 202 and the first set of second mounting position connection ports 226, 228 is disposed more proximal to bottom side 204. In some embodiments, this may however not be the case. The first set of first mounting position connection ports 222, 224 and the first set of second mounting position connection ports 226, 228 are also symmetric one to another with respect to a mid-plane 240 extending between top side 202 and bottom side 204 in the flow direction of charge air.

Likewise, second cooling stage connection ports 230, 232, 234, 236 include a second set of first mounting position connection ports 230, 232 and a second set of second mounting position connection ports 234, 236. The second set of first mounting position connection ports 230, 232 is disposed more proximal to top side 202 and the second set of second mounting position connection ports 234, 236 is disposed more proximal to bottom side 204. In some embodiments, this may however not be the case. The second set of first mounting position connection ports 230, 232 and the second set of second mounting position connection ports 234, 236 are also symmetric one to another with respect to mid-plane 240.

Thus, by rotating two-stage charge air cooler unit 50 by 180° in clockwise or counter-clockwise direction around an axis A defined by the crossing line between plane 216 and mid-plane 240, first mounting position connection ports 222, 224, 230, 232 of first and second cooling stages 42, 60, respectively, change places with second mounting position connection ports 226, 228, 234, 236 of first and second cooling stages 42, 60. Likewise, by rotating two-stage charge air cooler unit 50 by 180° in clockwise or counter-clockwise direction around axis A, first charge air opening 212 changes its place with second charge air opening 214.

As first and second charge air opening 212, 214 have the same geometry, and as first cooling stage connection ports 222, 224, 226, 228 and second cooling stage connection ports 230, 232, 234, 236 each have the same geometry, a rotation of two-stage charge air cooler unit 50 by 180° around axis A does not change any connection geometry. Thus, a direct connection of two-stage charge air cooler unit 50 to charge air passage 58, high-temperature cooling circuit 30 and low-temperature cooling circuit 34 in any of the two mounting positions of two-stage charge air cooler unit 50 is readily possible without the need to change any piping or connection ports of the remaining cooling system 100.

When two-stage charge air cooler unit 50 is mounted, for example, in its first mounting position in cooling system 100, as schematically shown in Fig. 2, first cooling stage 42 is connected to high-temperature cooling circuit connection ports 49 via the first set of first mounting position connection ports 222, 224, thereby forming high-temperature cooling circuit 30, and second cooling stage 60 is connected to low-temperature cooling circuit connection ports 67 via the second set of first mounting position connection ports 230, 232, thereby forming low-temperature cooling circuit 34.

Likewise, when two-stage charge air cooler unit 50 is mounted, for example, in its second mounting position in cooling system 100, as shown schematically in Fig. 3, second cooling stage 60 is connected to high-temperature cooling circuit connection ports 49 via the second set of second mounting position connection ports 234, 236, thereby forming high-temperature cooling circuit 30, and first cooling stage 42 is connected to low-temperature cooling circuit connection ports 67 via the first set of second mounting position connection ports 226, 228, thereby forming low-temperature cooling circuit 34.

In other words, in the first mounting position, first cooling stage 42 is in fluid connection with high-temperature cooling circuit 30 and second cooling stage 60 is in fluid connection with low-temperature cooling circuit 34. And in the second mounting position, first cooling stage 42 is in fluid connection with low-temperature cooling circuit 34 and second cooling stage 60 is in fluid connection with high-temperature cooling circuit 30.

In yet other words, in the first mounting position, first cooling stage 42 is connected to high-temperature cooling circuit 30 and second cooling stage 60 is connected to low-temperature cooling circuit 34. And, in the second mounting position, first cooling stage 42 is connected to low-temperature cooling circuit 34 and second cooling stage 60 is connected to high-temperature cooling circuit 30.

As in both mounting positions, two-stage charge air cooler unit 50 retains its connection geometry, there is no need to change any piping or any connection ports of high-temperature cooling circuit 30 and low-temperature cooling circuit 34.

In some embodiments, in the first mounting position of two-stage charge air cooler unit 50, first cooling stage 42 may be connected to high-temperature cooling circuit 30 via first cooling stage connection ports 224 and 226, and second cooling stage 60 may be connected to low-temperature cooling circuit 34 via second cooling stage connection ports 234, 236. And in the second mounting position of two-stage charge air cooler unit 50, second cooling stage 60 may be connected to high-temperature cooling circuit 30 via second cooling stage connection ports 232, 234, and first cooling stage 42 may be connected to low-temperature cooling circuit 34 via first cooling stage connection ports 222, 224. As first cooling stage connection ports 222, 224, 226, 228 and second cooling stage connection ports 230, 232, 234, 236 each have the same geometry, size, diameter, thread, etc. - generally each have identical connection geometry - any physically suitable way of connecting first and second cooling stages 42, 60 to high- and low-temperature cooling circuits 30, 34 in the first and second mounting position of two-stage charge air cooler unit 50 are equally conceivable.

There are, however, combinations of connection ports which, in any of the first or second mounting position of two-stage charge air cooler unit 50, physically make no sense, and, therefore, a person skilled in the art would not consider those combinations. Such combinations may become obvious when referring to Fig. 4.

Fig. 4 shows two-stage charge air cooler unit 50 of Fig. 2 in a configuration where coolant medium box 218 is disconnected from main body 200 and both components are rotated apart from one another about an axis indicated by a dashed line in Fig. 4. Elements already explained in connection with Fig. 1 to 3 have the same reference numerals.

As can be seen, coolant medium box 218 has a first coolant box portion 218A and a second coolant box portion 218B. First coolant box portion 218A is in fluid connection with first cooling stage 42, and second coolant box portion 218B is in fluid connection with second cooling stage 60. First coolant box portion 218A includes a first guide plate 400 dividing first coolant box portion 218A into a first chamber 402 and a second chamber 404. First chamber 402 includes first cooling stage connection ports 224 and 228, and second chamber 404 includes first cooling stage connection ports 222 and 226. Likewise, second coolant box portion 218B includes a second guide plate 406 dividing second coolant box portion 218B into a third chamber 408 and a fourth chamber 410. Third chamber 408 includes second cooling stage connection ports 232 and 236, and fourth chamber 410 includes second cooling stage connection ports 230 and 234.

Front side 206 includes a matrix configured to dispose a first set of heat exchanging tubes 412 of first cooling stage 42, and a second set of heat exchanging tubes 414 of second cooling stage 60. Heat exchanging tubes 412, 414 may be of any shape, material, geometry, diameter, wall thickness, length, etc. Heat exchanging tubes 412, 414 may be disposed in front side 206 in any layout and at any center-to-center distance between adjoining tubes, etc. Heat exchanging tubes 412, 414 protrude at least partially into charge air passageway defined by first and second charge air openings 212, 214. Heat exchanging tubes 412, 414 are configured to extract heat from charge air by coolant medium running through the tubes and charge air flowing over the tubes, thereby transferring heat from the charge air to the coolant medium.

When coolant medium box 218 is connected to main body 200, first and second guide plates 400, 406 contact front side 206, thereby forming a sealing line contact with front side 206, as indicated by dashed lines 400' and 406'. A flow of coolant medium entering, for example, first chamber 402 via first cooling stage connection port 224 or 228 then flows through first cooling stage 42 via heat exchanging tubes 412 disposed on the right-hand side of line 406' and returns via heat exchanging tubes 412 on the left-hand side of line 406'. Heat exchanging tubes 412 may, therefore, be U-shaped or connected to a second coolant medium box similar to coolant medium box 218 but without first and second guide plates 400, 406. After returning through heat exchanging tubes 412 on the left-hand side of line 406', the flow of coolant medium then enters second chamber 404 and exits second chamber 404 via first cooling stage connection port 222 or 226.

Likewise, a flow of coolant medium entering, for example, third chamber 408 via second cooling stage connection port 232 or 236 then flows through second cooling stage 60 via heat exchanging tubes 414 disposed on the right-hand side of line 400' and returns via heat exchanging tubes 414 on the left-hand side of line 400', entering fourth chamber 410 and exiting fourth chamber 410 via second cooling stage connection port 230 or 234.

Of course, in some embodiments, coolant medium may enter second chamber 404 and exit through first chamber 402, or may enter fourth chamber 410 and exit through third chamber 408, depending on the flow direction of coolant medium. In all cases, however, the coolant medium has to enter one chamber and leave through the other chamber in order for the coolant medium to circulate through heat exchanging tubes 412, 414 and, thus, transfer heat from charge air to the coolant medium. Therefore, as mentioned earlier, any combinations in which first and second cooling stages 42, 60 are connected to high- and low-temperature cooling circuits 30, 34 such that coolant medium enters one chamber and leaves through the same chamber, do not result in heat transfer between charge air and coolant medium, and, therefore, a person skilled in the art would not consider such a combination.

In some embodiments, first coolant box portion 218A and second coolant box portion 218B may include more than one guide plate, such as two or more guide plates for dividing first and second coolant box portions 218A, 218B into chambers. By using two guide plates in each of the first and second coolant box portions 218A, 218B, first and second coolant box portions 218A, 218B then each are divided into four chambers. However, in cases where more than one guide plate is included in first and second coolant box portions 218A, 218B, first cooling stage connection ports 222, 224, 226, 228 may be disposed in the outermost chambers of first coolant box portion 218A, and second cooling stage connection ports 230, 232, 234, 236 may be disposed in the outermost chambers of second coolant box portion 218B. Thus, in cases where more than one guide plate is included in first and second coolant box portions 218A, 218B, the connection geometry of two-stage charge air cooler unit 50 may still be the same as the one shown in Fig. 4.

Referring again to first and second cooling stages 42, 60, as can be seen in Fig. 4, first cooling stage 42, has a larger number of rows of heat exchanging tubes 412, than second cooling stage 60. For example, first cooling stage 42 may have 16 rows of heat exchanging tubes 412 arranged in the flow direction of charge air and second cooling stage 60 may have 12 rows of heat exchanging tubes 414 arranged in the flow direction of charge air. In some embodiments, first cooling stage 42 may have more or less than 16 rows of heat exchanging tubes 412, and second cooling stage 60 may have more or less than have 12 rows of heat exchanging tubes 414. By using a larger number of rows, a heat transfer performance may be increased. Thus, in the embodiment shown in Fig. 4, first cooling stage 42 has a larger heat transfer performance than second cooling stage 60.

A heat transfer performance may not only depend on the number of rows of heat exchanging tubes 412, 414, but may also depend on the overall length of heat exchanging tubes 412, 414 for a given number of rows, on a diameter, a cross-sectional area, a thickness of the heat exchanging tubes 412, 414, a layout of heat exchanging tubes 412, 414 as exemplarily shown in Fig. 4, a center-to-center distance between adjacent heat exchanging tubes 412, 414, a heat exchanging surface formed on an outer surface or an inner surface of heat exchanging tubes 412, 414, for example, by fins, a flow configuration between charge air and coolant medium, such as a cross-flow or counterflow configuration, etc., and so forth. Moreover, a heat transfer performance may also depend on the coolant medium itself, on the flow rate of coolant medium through heat exchanging tubes 412, 414, on the temperature of coolant medium entering heat exchanging tubes 412, 414, on the temperature of charge air etc. Thus, there are many parameters and combinations of parameters which together define the heat transfer performance of first and second cooling stages 42, 60. A larger number of rows of heat exchanging tubes 412, 414, however, results in a larger heat transfer performance, if all other parameters are kept constant.

When first cooling stage 42 has a larger heat transfer performance, for example, as shown in Fig. 4, by including a larger number of rows of heat exchanging tubes 412, 414, a heat transfer between charge air and coolant medium flowing through heat exchanging tubes 412, 414 may be increased. As a consequence, when two-stage charge air cooler unit 50 is mounted in cooling system 100 in its first mounting position, such that first cooling stage 42 is connected to high-temperature cooling circuit connection ports 49, a heat transfer to coolant medium circulating in high-temperature cooling circuit 30 may be increased. As a consequence, an amount of heat recoverable by high-temperature heat recovery system 32 disposed in high-temperature cooling circuit 30 (see Fig. 1) may be increased, and, therewith, a thermal efficiency of internal combustion engine 14 may be increased as well. Likewise, when two-stage charge air cooler unit 50 is mounted in cooling system 100 in its second mounting position, such that first cooling stage 42 is connected to low-temperature cooling circuit connection ports 67, a heat transfer to coolant medium circulating in low-temperature cooling circuit 34 may be increased. As a consequence, an amount of heat extracted from the charge air may be increased, and, therewith, a charge air temperature entering cylinder unit 24 at 45°C may be maintained for higher ambient air temperatures. Thus, in the second mounting position of two-stage charge air cooler unit 50 a resistance of internal combustion engine 14 to higher ambient air temperatures may be increased.

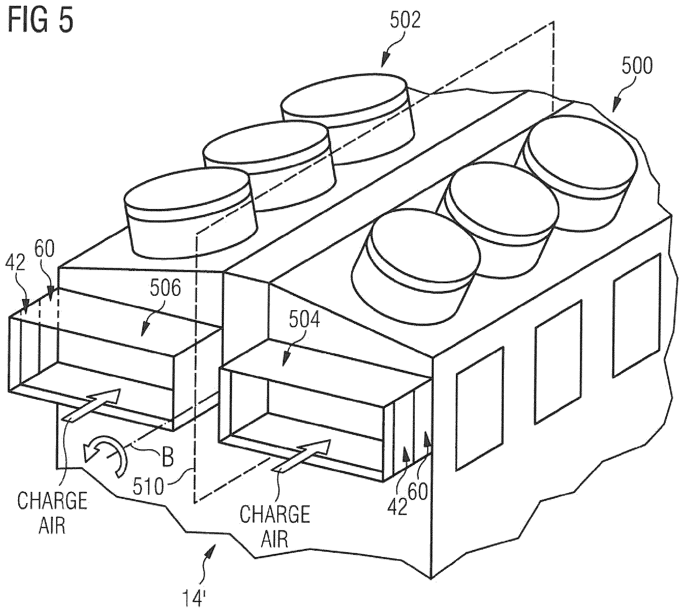

Fig. 5 shows a schematic drawing of a V-shaped internal combustion engine 14' including two two-stage charge air cooler units 50 as exemplary disclosed in Fig. 2 to 4.

V-shaped internal combustion engine 14' includes a first cylinder bank 500 and a second cylinder bank 502 opposite first cylinder bank 500. V-shaped internal combustion engine 14' further includes a first two-stage charge air cooler unit 504 with first cooling stage 42 and second cooling stage 60, and a second two-stage charge air cooler unit 506 with first cooling stage 42 and second cooling stage 60. For clarity, coolant medium box 218 is not shown in Fig. 5. First two-stage charge air cooler unit 504 is configured to cool a first flow of charge air admitted to first cylinder bank 500, and second two-stage charge air cooler unit 506 is configured to cool a second flow of charge air admitted to second cylinder bank 502. Thus, in the first mounting position, first cooling stages 42 of first and second two-stage charge air cooler units 504, 506 are connected to high-temperature cooling circuit 30, and second cooling stages 60 are connected to low-temperature cooling circuit 34. And in the second mounting position, first cooling stages 42 of first and second two-stage charge air cooler units 504, 506 are connected to low-temperature cooling circuit 34, and second cooling stages 60 are connected to high-temperature cooling circuits 34

As mentioned, first cooling stage connection ports 222, 224, 226, 228 and second cooling stage connection ports 230, 232, 234, 236 are symmetric with respect to plane 216 and each have the same geometry. Moreover, first mounting position connection ports 222, 224, 230, 232 and second mounting position connection ports 226, 228, 234, 236 are symmetric to mid-plane 240. First two-stage charge air cooler unit 504 may, therefore, be mounted to first and second cylinder banks 500, 502 by rotating first two-stage charge air cooler unit 504 180° around an axis B. Axis B extends in a plane 510 extending between first and second cylinder banks 500, 502 in a flow direction of charge air. Likewise, second two stage charge air cooler unit 506 may be mounted to second and first cylinder banks 502, 500 by rotating second two-stage charge air cooler unit 506 180° around axis B. Thus, both first and second two-stage charge air cooler units 504, 506 may be mounted to first and second cylinder banks 500, 502 without the need to change any components of V-shaped internal combustion engine 14'. Of course, first and second two-stage charge air cooler units 504, 506 may additionally be rotated around axis A (shown in Fig. 2 and 3).

### Industrial Applicability

Exemplary internal combustion engines suited to the disclosed cooling system are internal combustion engines of any type, such as those manufactured by Caterpillar Motoren GmbH & Co. KG, Kiel, Germany. Respective internal combustion engines may be operated at speeds of 400 - 1200 rpm and may be applied, for example, in land based power generator sets. One skilled in the art will however appreciate that the disclosed cooling system may also be adapted to suit other internal combustion engines.

In the following, operation of internal combustion engine 14 comprising cooling system 100 as exemplary disclosed herein is described with respect to Fig. 1 to 5.

When two-stage charge air cooler unit 50 is connected in its first mounting position, first cooling stage 42 is in fluid connection with high-temperature cooling circuit 30 and second cooling stage 60 is in fluid connection with low-temperature cooling circuit 34. During operation of internal combustion engine 14, ambient air is compressed in turbocharger 26 and enters two-stage charge air cooler unit 50 at a temperature of, for example, about 260°C. Heat exchanging pipes 412 protrude at least partially into the charge air passageway defined by first and second charge air openings 212, 214. The coolant medium circulating in heat exchanging tubes 412 then extracts heat from the hot charge air, thereby cooling the charge air from, for example, about 260°C to about 90°C, which causes the temperature of the coolant medium to increase from, for example, about 60°C to about 80°C. The already cooled down charge air then passes heat exchanging tubes 414 of second cooling stage 60. Thus, coolant medium circulating through low-temperature cooling circuit 34 extracts further heat from the charge air, thereby reducing a temperature of charge air further from, for example, about 90°C to about 45°C. This, in turn, causes the temperature of the coolant medium circulating in low-temperature cooling circuit 34 to increase from, for example, about 35°C to about 45°C.

For the sake of argument, first cooling stage 42 may include a high heat transfer performance and second cooling stage 60 may include a low heat transfer performance. Thus, when it is determined that a high heat transfer performance in high-temperature cooling circuit 30 is required, two-stage charge air cooler unit 50 is connected in the first mounting position. As first cooling stage 42 includes a high heat transfer performance, a heat transfer from hot charge air to high-temperature cooling circuit 30 may be increased, and therewith, a heat recoverable by high-temperature heat recovery system 32 may be increased as well. For example, if internal combustion engine 14 is used in a combined heat and power generation plant, by using two-stage charge air cooler unit 50 mounted in its first mounting position, a thermal power output and/or a thermal efficiency of the combined heat and power generation plant may be increased by, for example, 1 %. Thus, the first mounting position may be a preferred mounting position in cases a thermal power output needs to be maximized.

If, on the other hand internal combustion engine 14 is operated in hot areas, an ambient air temperature may be high. Thus, internal combustion engine 14 may not perform as desired. For example, internal combustion engine 14 may not provide the desired power output, may produce a high amount of exhaust emissions or may require more fuel to provide a desired power output or load. In those cases, a high heat transfer performance of second cooling stage 60 may be required. To provide a high heat transfer at the second cooling stage, two-stage charge air cooler unit 50, due to its symmetric design, may be rotated by 180° about axis A, such that in a second mounting position first cooling stage 42 is connected to low-temperature cooling circuit 34 and second cooling stage 60 is connected to high-temperature cooling circuit 30. As a consequence, when it is determined that a high heat transfer performance in low-temperature cooling circuit 30 is required, two-stage charge air cooler unit 50 is connected in the second mounting position. As first cooling stage 42 includes a high heat transfer performance, a heat transfer from charge air to low-temperature cooling circuit 34 may be increased. By transferring more heat to low-temperature cooling circuit 34, internal combustion engine 14 may be able to provide the desired power output or load at higher ambient temperatures. Thus, by rotating two-stage charge air cooler unit 50 between first and second mounting positions, both energy demands, e.g. high thermal power output and high engine efficiency at high ambient air temperatures, may be satisfied using a single two-stage charge air cooler unit in a single cooling system.

Moreover, as in both mounting positions the connection geometry on the cooler-side is retained, no change to piping or connection ports of the cooling system other than rotating the two-stage charge air cooler unit is required. Thus, the two-stage charge air cooler unit as exemplary disclosed herein may be integrated within a single cooling system for providing both energy demands using a minimized amount of effort and a minimized amount of administrative costs.

Although the preferred embodiments of this invention have been described herein, improvements and modifications may be incorporated without departing from the scope of the following claims.

## Claims

1. A cooling system (100) for an internal combustion engine (14), the cooling system (100) comprising:
a high-temperature cooling circuit piping (44, 46, 48) including high-temperature cooling circuit connection ports (49);
a low-temperature cooling circuit piping (64, 66) including low-temperature cooling circuit connection ports (67); and
a two-stage charge air cooler unit (50; 504, 506) including a first cooling stage (42) with first cooling stage connection ports (43; 222, 224, 226, 228) and a second cooling stage (60) with second cooling stage connection ports (61; 230, 232, 234, 236), the first cooling stage (42) providing a first heat transfer performance, and the second cooling stage (60) providing a second heat transfer performance different from the first heat transfer performance,
wherein the first cooling stage connection ports (43; 222, 224, 226, 228) and the second cooling stage connection ports (61; 230,232, 234, 236) have the same geometry and are symmetric to each other with respect to a plane (216) perpendicular to a flow direction of charge air, and
wherein the two-stage charge air cooler unit (50) is configured to be mounted in the cooling system (100) in a first mounting position, in which the first cooling stage (50) is connected to the high-temperature cooling circuit connection ports (49) via the first cooling stage connection ports (43; 222, 224, 226, 228) and the second cooling stage (60) is connected to the low-temperature cooling circuit connection ports (67) via the second cooling stage connection ports (61; 230,232, 234, 236), and in a second mounting position in which the first cooling stage (42) is connected to the low-temperature cooling circuit connection ports (67) via the first cooling stage connection ports (43; 222, 224, 226, 228) and the second cooling stage (60) is connected to the high-temperature cooling circuit connection ports (49) via the second cooling stage connection ports (61; 230,232, 234, 236).

2. The cooling system (100) according to claim 1, wherein the high-temperature cooling circuit piping (44, 46, 48), the high-temperature cooling circuit connection ports (49), the low-temperature cooling circuit piping (64, 66), and the low-temperature cooling circuit connection ports (67) have the same fixed geometry and the same fixed position within the cooling system (100) for the first mounting position and the second mounting position of the two-stage charge air cooler unit (50).

3. The cooling system (100) according to any one of claims 1 and 2, wherein the two-stage charge air cooler unit (50) further includes a first charge air opening (212) and a second charge air opening (214) opposite the first charge air opening (212), the first charge air opening (212) and the second charge air opening (214) defining a charge air passageway for guiding charge air through the two-stage charge air cooler unit (50), wherein the first charge air opening (212) and the second charge air opening (214) have the same geometry and are symmetric with respect to the plane (216).

4. The cooling system (100) according to any one of the preceding claims, wherein the first cooling stage connection ports (43; 222, 224, 226, 228) include a first set of first mounting position connection ports (222, 224) and a first set of second mounting position connection ports (226, 228), and the second cooling stage connection ports (61; 230,232, 234, 236) include a second set of first mounting position connection ports (230, 232) and a second set of second mounting position connection ports (234, 236), wherein,
in the first mounting position, the first cooling stage (42) is connected to the high-temperature cooling circuit connection ports (49) via the first set of first mounting position connection ports (222, 224), and the second cooling stage (60) is connected to the low-temperature cooling circuit connection ports (67) via the second set of first mounting position connection ports (230, 232), and wherein,
in the second mounting position, the first cooling stage (42) is connected to the low-temperature cooling circuit connection ports (67) via the first set of second mounting position connection ports (226, 228), and the second cooling stage (60) is connected to the high-temperature cooling circuit connection ports (49) via the second set of second mounting position connection ports (234, 236).

5. The cooling system (100) according to claim 4, wherein the first and second sets of first mounting position connection ports (222, 224, 230, 232) and the first and second sets of second mounting position connection ports (226, 228, 234, 236) have the same geometry and are symmetric to each other with respect to a mid-plane (240) of a charge air passageway extending in the flow direction of charge air.

6. The cooling system (100) according to any one of the preceding claims, wherein the first cooling stage (42) includes a first set of heat exchanging tubes (412), and the second cooling stage (60) includes a second set of heat exchanging tubes (414), the first and second sets of heat exchanging tubes (412, 414) protruding at least partially into a charge air passageway for cooling charge air, wherein the first and second set of heat exchanging tubes (412, 414) differ from one another in at least in one of:
a length of the heat exchanging tubes (412, 414);
a diameter of the heat exchanging tubes (412, 414);
a thickness of the heat exchanging tubes (412, 414);
a layout of the heat exchanging tubes (412, 414); and
a center-to-center distance between adjacent heat exchanging tubes (412, 414).

7. The cooling system (100) according to any one of the preceding claims, wherein the first heat transfer performance is a high heat transfer performance and the second heat transfer performance is a low heat transfer performance.

8. The cooling system (100) according to claim 7, wherein the two-stage charge air cooler unit (50) in the first mounting position is configured to provide a high heat transfer to the high-temperature cooling circuit (30), and wherein the two-stage charge air cooler unit (50) in the second mounting position is configured to provide a high heat transfer to the low-temperature cooling circuit (34).

9. The cooling system (100) according to claim 8, wherein a high heat transfer to the high-temperature cooling circuit (30) results in a higher thermal power output of the internal combustion engine (14) and a high heat transfer to the low-temperature cooling circuit (34) results in a higher engine efficiency at high ambient air temperatures.

10. The cooling system (100) according to any one of the preceding claims, wherein the cooling system (100) is configured to be used in an a V-shaped internal combustion engine (14'), the V-shaped internal combustion engine (14') including a first cylinder bank (500) and a second cylinder bank (502), the cooling system (100) further comprising:
a first two-stage charge air cooler unit (504) configured to cool a first flow of charge air admitted to the first cylinder bank (500); and
a second two-stage charge air cooler unit (506) configured to cool a second flow of charge air admitted to the second cylinder bank (502), wherein,
in the first mounting position, both first cooling stages (42) are connected to the high-temperature cooling circuit connection ports (49) via the first cooling stage connection ports (43; 222, 224, 226, 228), and both second cooling stages (60) are connected to the low-temperature cooling circuit connection ports (67) via the second cooling stage connection ports (61; 230,232, 234, 236), and wherein,
in the second mounting position, both first cooling stages (42) are connected to the low-temperature cooling circuit connection ports (67) via the first cooling stage connection ports (43; 222, 224, 226, 228), and both second cooling stages (60) are connected to the high-temperature cooling circuit connection ports (49) via the second cooling stage connection ports (61; 230,232, 234, 236).

11. The cooling system (100) according to claim 10, wherein the first two-stage charge air cooler unit (504) and the second two-stage charge air cooler unit (506) are each connectable to the first and second cylinder banks (500, 502) by rotating around an axis (B) extending in a plane (510) between the first cylinder bank (500) and the second cylinder bank (502) in the flow direction of charge air.

12. An internal combustion engine (14, 14'), comprising:
a cylinder unit (24);
a turbocharger (26) configured to provide charge air to the cylinder unit (24); and
a cooling system (100) according to any one of the preceding claims.

13. The internal combustion engine (14, 14') according to claim 12, wherein the high-temperature cooling circuit (30) is further configured to cool the cylinder unit (24), and the low-temperature cooling circuit (34) is further configured to discharge remaining heat to the environment, for example, via a table cooler.

14. A method for connecting a two-stage charge air cooler unit (50) in a cooling system (100) for an internal combustion engine (14), the cooling system (100) including a high-temperature cooling circuit (30) and a low-temperature cooling circuit (34), the two-stage charge air cooler unit (50) including a first cooling stage (42) with a high heat transfer performance and a second cooling stage (60) with a low heat transfer performance, the two-stage charge air cooler unit (50) being configured to be mounted in the cooling system (100) in a first mounting position and in a second mounting position, wherein, in the first mounting position, the first cooling stage (42) is connected to the high-temperature cooling circuit (30), and the second cooling stage is connected to the low-temperature cooling circuit (34), and wherein, in the second mounting position, the first cooling stage (42) is connected to the low-temperature cooling circuit (34), and the second cooling stage (60) is connected to the high-temperature cooling circuit (30), the method comprising:
determining whether a high heat transfer performance in the high-temperature cooling circuit (30) or in the low-temperature cooling circuit (34) is required;
connecting the two-stage charge air cooler unit (50) in the first mounting position if a high heat transfer performance in the high-temperature cooling circuit (30) is required; and
connecting the two-stage charge air cooler unit (50) in the second mounting position if a high heat transfer performance in the low-temperature cooling circuit (34) is required.

## Patentansprüche

1. Kühlsystem (100) für einen Verbrennungsmotor (14), das Kühlsystem (100) umfassend:
eine Hochtemperatur-Kühlkreislaufverrohrung (44, 46, 48), enthaltend Hochtemperatur-Kühlkreislaufverbindungsanschlüsse (49);
eine Niedertemperatur-Kühlkreislaufverrohrung (64, 66), enthaltend Niedertemperatur-Kühlkreislaufverbindungsanschlüsse (67); und
eine Zweistufen-Ladeluftkühlungseinheit (50; 504, 506), enthaltend eine erste Kühlstufe (42) mit ersten Kühlstufenverbindungsanschlüssen (43; 222, 224, 226, 228) und eine zweite Kühlstufe (60) mit zweiten Kühlstufenverbindungsanschlüssen (61; 230; 232, 234, 236), wobei die erste Kühlstufe (42) eine erste Wärmeübertragungsleistung bereitstellt und die zweite Kühlstufe (60) eine zweite Wärmeübertragungsleistung bereitstellt, die sich von der ersten Wärmeübertragungsleistung unterscheidet,
wobei die ersten Kühlstufenverbindungsanschlüsse (43; 222, 224, 226, 228) und die zweiten Kühlstufenverbindungsanschlüsse (61; 230; 232, 234, 236) dieselbe Geometrie aufweisen und in Bezug auf eine Ebene (216) senkrecht zu einer Strömungsrichtung von Ladeluft symmetrisch zueinander sind und
wobei die Zweistufen-Ladeluftkühlungseinheit (50) konfiguriert ist, im Kühlsystem (100) in einer ersten Montageposition, in der die erste Kühlstufe (50) mit den Hochtemperatur-Kühlkreislaufverbindungsanschlüssen (49) durch die ersten Kühlstufenverbindungsanschlüsse (43; 222, 224, 226, 228) verbunden ist und die zweite Kühlstufe (60) mit den Niedertemperatur-Kühlkreislaufverbindungsanschlüssen (67) durch die zweiten Kühlstufenverbindungsanschlüsse (61; 230; 232, 234, 236) verbunden ist, und in einer zweiten Montageposition montiert zu werden, in der die erste Kühlstufe (42) mit den Niedertemperatur-Kühlkreislaufverbindungsanschlüssen (67) durch die ersten Kühlstufenverbindungsanschlüsse (43; 222, 224, 226, 228) verbunden ist und die zweite Kühlstufe (60) mit den Hochtemperatur-Kühlkreislaufverbindungsanschlüssen (49) durch die zweiten Kühlstufenverbindungsanschlüsse (61; 230; 232, 234, 236) verbunden ist.

2. Kühlsystem (100) nach Anspruch 1, wobei die Hochtemperatur-Kühlkreislaufverrohrung (44, 46, 48), die Hochtemperatur-Kühlkreislaufverbindungsanschlüsse (49); die Niedertemperatur-Kühlkreislaufverrohrung (64, 66) und die Niedertemperatur-Kühlkreislaufverbindungsanschlüsse (67) dieselbe festgesetzte Geometrie und dieselbe festgesetzte Position innerhalb des Kühlsystems (100) für die erste Montageposition und die zweite Montageposition der Zweistufen-Ladeluftkühlungseinheit (50) haben.

3. Kühlsystem (100) nach einem der Ansprüche 1 und 2, wobei die Zweistufen-Ladeluftkühlungseinheit (50) weiter eine erste Ladeluftöffnung (212) und eine zweite Ladeluftöffnung (214) gegenüber der ersten Ladeluftöffnung (212) enthält, wobei die erste Ladeluftöffnung (212) und die zweite Ladeluftöffnung (214) einen Ladeluftdurchgang zum Leiten von Ladeluft durch die Zweistufen-Ladeluftkühlungseinheit (50) definieren, wobei die erste Ladeluftöffnung (212) und die zweite Ladeluftöffnung (214) dieselbe Geometrie aufweisen und in Bezug auf die Ebene (216) symmetrisch zueinander sind.

4. Kühlsystem (100) nach einem der vorstehenden Ansprüche, wobei die ersten Kühlstufenverbindungsanschlüsse (43; 222, 224, 226, 228) einen ersten Satz erster Montagepositionsverbindungsanschlüsse (222, 224) und einen ersten Satz zweiter Montagepositionsverbindungsanschlüsse (226, 228) enthalten und die zweiten Kühlstufenverbindungsanschlüsse (61; 230; 232, 234, 236) einen zweiten Satz erster Montagepositionsverbindungsanschlüsse (230, 232) und einen zweiten Satz zweiter Montagepositionsverbindungsanschlüsse (234, 236) enthalten, wobei
in der ersten Montageposition die erste Kühlstufe (42) mit den Hochtemperatur-Kühlkreislaufverbindungsanschlüssen (49) durch den ersten Satz erster Montagepositionsverbindungsanschlüsse (222, 224) verbunden ist und die zweite Kühlstufe (60) mit den Niedertemperatur-Kühlkreislaufverbindungsanschlüssen (67) durch den zweiten Satz erster Montagepositionsverbindungsanschlüsse (230, 232) verbunden ist und wobei
in der zweiten Montageposition die erste Kühlstufe (42) mit den Niedertemperatur-Kühlkreislaufverbindungsanschlüssen (67) durch den ersten Satz zweiter Montagepositionsverbindungsanschlüsse (226, 228) verbunden ist und die zweite Kühlstufe (60) mit den Hochtemperatur-Kühlkreislaufverbindungsanschlüssen (49) durch den zweiten Satz zweiter Montagepositionsverbindungsanschlüsse (234, 236) verbunden ist.

5. Kühlsystem (100) nach Anspruch 4, wobei der erste und zweite Satz erster Montagepositionsverbindungsanschlüsse (222, 224, 230, 232) und der erste und zweite Sätze zweiter Montagepositionsverbindungsanschlüsse (226, 228, 234, 236) dieselbe Geometrie aufweisen und in Bezug auf eine Mittelebene (240) eines Ladeluftdurchgangs, der sich in Strömungsrichtung von Ladeluft erstreckt, symmetrisch zueinander sind.

6. Kühlsystem (100) nach einem der vorstehenden Ansprüche, wobei die erste Kühlstufe (42) einen ersten Satz von Wärmeaustauschrohren (412) enthält und die zweite Kühlstufe (60) einen zweiten Satz von Wärmeaustauschrohren (414) enthält, wobei der erste und zweite Satz von Wärmeaustauschrohren (412, 414) zumindest teilweise in einen Ladeluftdurchgang zum Kühlen von Ladeluft ragt, wobei sich der erste und zweite Satz von Wärmeaustauschrohren (412, 414) voneinander in zumindest einem unterscheiden von:
einer Länge der Wärmeaustauschrohre (412, 414);
einem Durchmesser der Wärmeaustauschrohre (412, 414);
einer Dicke der Wärmeaustauschrohre (412, 414);
einer Verlegung der Wärmeaustauschrohre (412, 414); und
einem Abstand von Mittelpunkt zu Mittelpunkt zwischen benachbarten Wärmeaustauschrohren (412, 414).

7. Kühlsystem (100) nach einem der vorstehenden Ansprüche, wobei die erste Wärmeübertragungsleistung eine hohe Wärmeübertragungsleistung ist und die zweite Wärmeübertragungsleistung eine niedere Wärmeübertragungsleistung ist.

8. Kühlsystem (100) nach Anspruch 7, wobei die Zweistufen-Ladeluftkühlungseinheit (50) in der ersten Montageposition konfiguriert ist, eine hohe Wärmeübertragung zum Hochtemperatur-Kühlkreislauf (30) bereitzustellen und wobei die Zweistufen-Ladeluftkühlungseinheit (50) in der zweiten Montageposition konfiguriert ist, eine hohe Wärmeübertragung zum Niedertemperatur-Kühlkreislauf (34) bereitzustellen.

9. Kühlsystem (100) nach Anspruch 8, wobei eine hohe Wärmeübertragung zum Hochtemperatur-Kühlkreislauf (30) zu einer höheren Wärmeenergieausgabe des Verbrennungsmotors (14) führt und eine hohe Wärmeübertragung zum Niedertemperatur-Kühlkreislauf (34) zu einer höheren Motoreffizienz bei hohen Umgebungslufttemperaturen führt.

10. Kühlsystem (100) nach einem der vorstehenden Ansprüche, wobei das Kühlsystem (100) konfiguriert ist, in einem V-förmigen Verbrennungsmotor (14') verwendet zu werden, wobei der V-förmige Verbrennungsmotor (14') eine erste Zylinderreihe (500) und eine zweite Zylinderreihe (502) enthält, das Kühlsystem (100) weiter umfassend:
eine erste Zweistufen-Ladeluftkühlungseinheit (504), die zum Kühlen eines ersten Ladeluftstroms konfiguriert ist, der zur ersten Zylinderreihe (500) eingelassen wird; und
eine zweite Zweistufen-Ladeluftkühlungseinheit (506), die zum Kühlen eines zweiten Ladeluftstroms konfiguriert ist, der zur zweiten Zylinderreihe (502) eingelassen wird, wobei
in der ersten Montageposition beide ersten Kühlstufen (42) mit den Hochtemperatur-Kühlkreislaufverbindungsanschlüssen (49) durch die ersten Kühlstufenverbindungsanschlüsse (43; 222, 224, 226, 228) verbunden sind und beide zweiten Kühlstufen (60) mit den Niedertemperatur-Kühlkreislaufverbindungsanschlüssen (67) durch die zweiten Kühlstufenverbindungsanschlüsse (61; 230; 232, 234, 236) verbunden sind und wobei
in der zweiten Montageposition beide ersten Kühlstufen (42) mit den Niedertemperatur-Kühlkreislaufverbindungsanschlüssen (67) durch die ersten Kühlstufenverbindungsanschlüsse (43; 222, 224, 226, 228) verbunden sind und beide zweiten Kühlstufen (60) mit den Hochtemperatur-Kühlkreislaufverbindungsanschlüssen (49) durch die zweiten Kühlstufenverbindungsanschlüsse (61; 230; 232, 234, 236) verbunden sind.

11. Kühlsystem (100) nach Anspruch 10, wobei die erste Zweistufen-Ladeluftkühlungseinheit (504) und die zweite Zweistufen-Ladeluftkühlungseinheit (506) jeweils mit der ersten und zweiten Zylinderreihe (500, 502) durch Drehen um eine Achse (B), die sich in einer Ebene (510) zwischen der ersten Zylinderreihe (500) und der zweiten Zylinderreihe (502) in der Strömungsrichtung von Ladeluft erstreckt, verbunden werden können.

12. Verbrennungsmotor (14, 14'), umfassend:
eine Zylindereinheit (24);
einen Turbolader (26), der konfiguriert ist, der Zylindereinheit (24) Ladeluft bereitzustellen; und
ein Kühlsystem (100) nach einem der vorstehenden Ansprüche.

13. Verbrennungsmotor (14, 14') nach Anspruch 12, wobei der Hochtemperatur-Kühlkreislauf (30) weiter konfiguriert ist, die Zylindereinheit (24) zu kühlen, und der Niedertemperatur-Kühlkreislauf (34) weiter konfiguriert ist, Restwärme an die Umgebung, zum Beispiel über einen Tischkühler, abzugeben.

14. Verfahren zum Verbinden einer Zweistufen-Ladeluftkühlungseinheit (50) in einem Kühlsystem (100) für einen Verbrennungsmotor (14), das Kühlsystem (100) enthaltend einen Hochtemperatur-Kühlkreislauf (30) und einen Niedertemperatur-Kühlkreislauf (34), die Zweistufen-Ladeluftkühlungseinheit (50) enthaltend eine erste Kühlstufe (42) mit einer hohen Wärmeübertragungsleistung und eine zweite Kühlstufe (60) mit einer niederen Wärmeübertragungsleistung, wobei die Zweistufen-Ladeluftkühlungseinheit (50) konfiguriert ist, im Kühlsystem (100) in einer ersten Montageposition und in einer zweiten Montageposition montiert zu werden, wobei in der ersten Montageposition die erste Kühlstufe (42) mit dem Hochtemperatur-Kühlkreislauf (30) verbunden ist und die zweite Kühlstufe mit dem Niedertemperatur-Kühlkreislauf (34) verbunden ist und wobei in der zweiten Montageposition die erste Kühlstufe (42) mit dem Niedertemperatur-Kühlkreislauf (34) verbunden ist und die zweite Kühlstufe (60) mit dem Hochtemperatur-Kühlkreislauf (30) verbunden ist, das Verfahren umfassend:
Bestimmen, ob eine hohe Wärmeübertragungsleistung im Hochtemperatur-Kühlkreislauf (30) oder im Niedertemperatur-Kühlkreislauf (34) erforderlich ist;
Verbinden der Zweistufen-Ladeluftkühlungseinheit (50) in der ersten Montageposition, falls eine hohe Wärmeübertragungsleistung im Hochtemperatur-Kühlkreislauf (30) erforderlich ist; und
Verbinden der Zweistufen-Ladeluftkühlungseinheit (50) in der zweiten Montageposition, falls eine hohe Wärmeübertragungsleistung im Niedertemperatur-Kühlkreislauf (34) erforderlich ist.

## Revendications

1. Système de refroidissement (100) pour un moteur à combustion interne (14), le système de refroidissement (100) comprenant :
une tuyauterie de circuit de refroidissement haute température (44, 46, 48) comprenant des orifices de connexion de circuit de refroidissement haute température (49) ;
une tuyauterie de circuit de refroidissement basse température (64, 66) comprenant des orifices de connexion de circuit de refroidissement basse température (67) ; et
une unité de refroidisseur d'air de suralimentation à deux étages (50 ; 504, 506) comprenant un premier étage de refroidissement (42) avec des orifices de connexion de premier étage de refroidissement (43 ; 222, 224, 226, 228) et un second étage de refroidissement (60) avec des orifices de connexion de second étage de refroidissement (61 ; 230, 232, 234, 236), le premier étage de refroidissement (42) fournissant une première performance de transfert de chaleur, et le second étage de refroidissement (60) fournissant une seconde performance de transfert de chaleur différente de la première performance de transfert de chaleur,
dans lequel les orifices de connexion de premier étage de refroidissement (43 ; 222, 224, 226, 228) et les orifices de connexion de second étage de refroidissement (61 ; 230, 232, 234, 236) ont la même géométrie et sont symétriques l'un par rapport à l'autre par rapport à un plan (216) perpendiculaire à une direction d'écoulement d'air de suralimentation, et
dans lequel l'unité de refroidisseur d'air de suralimentation à deux étages (50) est configurée pour être montée dans le système de refroidissement (100) dans une première position de montage, dans laquelle le premier étage de refroidissement (50) est connecté aux orifices de connexion de circuit de refroidissement haute température (49) via les orifices de connexion de premier étage de refroidissement (43 ; 222, 224, 226, 228) et le second étage de refroidissement (60) est connecté aux orifices de connexion de circuit de refroidissement basse température (67) via les orifices de connexion de second étage de refroidissement (61 ; 230, 232, 234, 236), et dans une seconde position de montage dans laquelle le premier étage de refroidissement (42) est connecté aux orifices de connexion de circuit de refroidissement basse température (67) via les orifices de connexion de premier étage de refroidissement (43 ; 222 , 224, 226, 228) et le second étage de refroidissement (60) est connecté aux orifices de connexion de circuit de refroidissement haute température (49) via les orifices de connexion de second étage de refroidissement (61 ; 230, 232, 234, 236).

2. Système de refroidissement (100) selon la revendication 1, dans lequel la tuyauterie de circuit de refroidissement haute température (44, 46, 48), les orifices de connexion de circuit de refroidissement haute température (49), la tuyauterie de circuit de refroidissement basse température (64, 66), et les orifices de connexion de circuit de refroidissement basse température (67) ont la même géométrie fixe et la même position fixe dans le système de refroidissement (100) pour la première position de montage et la seconde position de montage de l'unité de refroidisseur d'air de suralimentation à deux étages (50).

3. Système de refroidissement (100) selon l'une quelconque des revendications 1 et 2, dans lequel l'unité de refroidisseur d'air de suralimentation à deux étages (50) comprend en outre une première ouverture d'air de suralimentation (212) et une seconde ouverture d'air de suralimentation (214) opposée à la première ouverture d'air de suralimentation (212), la première ouverture d'air de suralimentation (212) et la seconde ouverture d'air de suralimentation (214) définissant un passage d'air de suralimentation destiné à guider de l'air de suralimentation à travers l'unité de refroidissement à deux étages (50), dans lequel la première ouverture d'air de suralimentation (212) et la seconde ouverture d'air de suralimentation (214) ont la même géométrie et sont symétriques par rapport au plan (216).

4. Système de refroidissement (100) selon l'une quelconque des revendications précédentes, dans lequel les orifices de connexion de premier étage de refroidissement (43 ; 222, 224, 226, 228) comprennent un premier ensemble d'orifices de connexion de première position de montage (222, 224) et un premier ensemble d'orifices de connexion de seconde position de montage (226, 228), et les orifices de connexion de second étage de refroidissement (61 ; 230, 232, 234, 236) comprennent un second ensemble d'orifices de connexion de première position de montage (230, 232) et un second ensemble d'orifices de connexion de seconde position de montage (234, 236), dans lequel,
dans la première position de montage, le premier étage de refroidissement (42) est connecté aux orifices de connexion de circuit de refroidissement haute température (49) via le premier ensemble d'orifices de connexion de première position de montage (222, 224), et le second étage de refroidissement (60) est connecté aux orifices de connexion de circuit de refroidissement basse température (67) via le second ensemble d'orifices de connexion de première position de montage (230, 232), et dans lequel,
dans la seconde position de montage, le premier étage de refroidissement (42) est connecté aux orifices de connexion de circuit de refroidissement basse température (67) via le premier ensemble d'orifices de connexion de seconde position de montage (226, 228), et le second étage de refroidissement (60) est connecté aux orifices de connexion de circuit de refroidissement haute température (49) via le second ensemble d'orifices de connexion de seconde position de montage (234, 236).

5. Système de refroidissement (100) selon la revendication 4, dans lequel les premier et second ensembles d'orifices de connexion de première position de montage (222, 224, 230, 232) et les premier et second ensembles d'orifices de connexion de seconde position de montage (226, 228, 234, 236) ont la même géométrie et sont symétriques les uns par rapport aux autres par rapport à un plan médian (240) d'un passage d'air de suralimentation s'étendant dans la direction d'écoulement d'air de suralimentation.

6. Système de refroidissement (100) selon l'une quelconque des revendications précédentes, dans lequel le premier étage de refroidissement (42) comprend un premier ensemble de tubes d'échange de chaleur (412), et le second étage de refroidissement (60) comprend un second ensemble de tubes d'échange de chaleur (414), les premier et second ensembles de tubes d'échange de chaleur (412, 414) faisant saillie au moins partiellement dans un passage d'air de suralimentation pour refroidir l'air de suralimentation, dans lequel le premier et le second ensemble de tubes d'échange de chaleur (412, 414) diffèrent l'un de l'autre dans au moins un parmi :
une longueur des tubes d'échange de chaleur (412, 414) ;
un diamètre des tubes d'échange de chaleur (412, 414) ;
une épaisseur des tubes d'échange de chaleur (412, 414) ;
une disposition des tubes d'échange de chaleur (412, 414) ; et
une distance centre à centre entre des tubes d'échange de chaleur adjacents (412, 414).

7. Système de refroidissement (100) selon l'une quelconque des revendications précédentes, dans lequel la première performance de transfert de chaleur est une performance de transfert de chaleur élevée et la seconde performance de transfert de chaleur est une performance de transfert de chaleur basse.

8. Système de refroidissement (100) selon la revendication 7, dans lequel l'unité de refroidisseur d'air de suralimentation à deux étages (50) dans la première position de montage est configurée pour fournir un transfert de chaleur élevé au circuit de refroidissement haute température (30), et dans lequel l'unité de refroidisseur d'air de suralimentation à deux étages (50) dans la seconde position de montage est configurée pour fournir un transfert de chaleur élevé au circuit de refroidissement basse température (34).

9. Système de refroidissement (100) selon la revendication 8, dans lequel un transfert de chaleur élevé vers le circuit de refroidissement haute température (30) entraîne une sortie de puissance thermique supérieure du moteur à combustion interne (14), et un transfert de chaleur élevé vers le circuit de refroidissement basse température (34) entraîne une efficacité de moteur supérieure à des températures d'air ambiant élevées.

10. Système de refroidissement (100) selon l'une quelconque des revendications précédentes, dans lequel le système de refroidissement (100) est configuré pour être utilisé dans un moteur à combustion interne en forme de V (14'), le moteur à combustion interne en forme de V (14') comprenant une première rangée de cylindres (500) et une seconde rangée de cylindres (502), le système de refroidissement (100) comprenant en outre :
une première unité de refroidisseur d'air de suralimentation à deux étages (504) configurée pour refroidir un premier écoulement d'air de suralimentation admis dans la première rangée de cylindres (500) ; et
une seconde unité de refroidisseur d'air de suralimentation à deux étages (506) configurée pour refroidir un second écoulement d'air de suralimentation admis dans la seconde rangée de cylindres (502), dans lequel,
dans la première position de montage, les premiers étages de refroidissement (42) sont connectés aux orifices de connexion de circuit de refroidissement haute température (49) via les orifices de connexion de premier étage de refroidissement (43 ; 222, 224, 226, 228), et les seconds étages de refroidissement (60) sont connectés aux orifices de connexion de circuit de refroidissement basse température (67) via les orifices de connexion de second étage de refroidissement (61 ; 230, 232, 234, 236), et dans lequel,
dans la seconde position de montage, les premiers étages de refroidissement (42) sont connectés aux orifices de connexion de circuit de refroidissement basse température (67) via les orifices de connexion de premier étage de refroidissement (43 ; 222, 224, 226, 228), et les seconds étages de refroidissement (60) sont connectés aux orifices de connexion de circuit de refroidissement haute température (49) via les orifices de connexion de second étage de refroidissement (61 ; 230, 232, 234, 236).

11. Système de refroidissement (100) selon la revendication 10, dans lequel la première unité de refroidisseur d'air de suralimentation à deux étages (504) et la seconde unité de refroidisseur d'air de suralimentation à deux étages (506) peuvent chacune être connectées aux première et seconde rangées de cylindres (500, 502) en tournant autour d'un axe (B) s'étendant dans un plan (510) entre la première rangée de cylindres (500) et la seconde rangée de cylindres (502) dans la direction d'écoulement d'air de suralimentation.

12. Moteur à combustion interne (14, 14'), comprenant :
une unité de cylindre (24) ;
un turbocompresseur de suralimentation (26) configuré pour fournir de l'air de suralimentation à l'unité de cylindre (24) ; et
un système de refroidissement (100) selon l'une quelconque des revendications précédentes.

13. Moteur à combustion interne (14, 14') selon la revendication 12, dans lequel le circuit de refroidissement haute température (30) est en outre configuré pour refroidir l'unité de cylindre (24), et le circuit de refroidissement basse température (34) est en outre configuré pour évacuer la chaleur restante vers l'environnement, par exemple via un refroidisseur tableau.

14. Procédé de connexion d'une unité de refroidisseur d'air de suralimentation à deux étages (50) dans un système de refroidissement (100) destiné à un moteur à combustion interne (14), le système de refroidissement (100) comprenant un circuit de refroidissement haute température (30) et un circuit de refroidissement basse température (34), l'unité de refroidisseur d'air de suralimentation à deux étages (50) comprenant un premier étage de refroidissement (42) à performance de transfert de chaleur élevée et un second étage de refroidissement (60) à performance de transfert de chaleur basse, l'unité de refroidisseur d'air de suralimentation à deux étages (50) étant configurée pour être montée dans le système de refroidissement (100) dans une première position de montage et dans une seconde position de montage, dans lequel, dans la première position de montage, le premier étage de refroidissement (42) est connecté au circuit de refroidissement haute température (30) et le second étage de refroidissement est connecté au circuit de refroidissement basse température (34), et dans lequel, dans la seconde position de montage, le premier étage de refroidissement (42) est connecté au circuit de refroidissement basse température (34), et le second étage de refroidissement (60) est connecté au circuit de refroidissement haute température (30), le procédé comprenant les étapes consistant à :
déterminer si une performance de transfert de chaleur élevée dans le circuit de refroidissement haute température (30) ou dans le circuit de refroidissement basse température (34) est requise ;
connecter l'unité de refroidisseur d'air de suralimentation à deux étages (50) dans la première position de montage si une performance de transfert de chaleur élevée dans le circuit de refroidissement haute température (30) est requise ; et
connecter l'unité de refroidissement d'air de suralimentation à deux étages (50) dans la seconde position de montage si une performance de transfert de chaleur élevée dans le circuit de refroidissement basse température (34) est requise.
